(19) Europäisches Patentamt
European Patent Office
Office européen des brevets

(11) **EP 3 933 725 A1**

(12) **EUROPÄISCHE PATENTANMELDUNG**

(43) Veröffentlichungstag:
**05.01.2022 Patentblatt 2022/01**

(51) Int Cl.:
***G06Q 10/04*** *(2012.01)*

(21) Anmeldenummer: **21183838.8**

(22) Anmeldetag: **05.07.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **03.07.2020 EP 20184001**

(71) Anmelder: **OrgaCard Siemantel & Alt GmbH**
**91126 Rednitzhembach (DE)**

(72) Erfinder:
• **MARTIN, Alexander**
**90489 Nürnberg (DE)**

• **WENINGER, Dieter**
**91459 Markt Erlbach (DE)**
• **BÄRMANN, Andreas**
**91058 Tennenlohe (DE)**
• **MÜLLER, Alexander**
**90425 Nürnberg (DE)**
• **ALT, Ralf**
**90762 Fürth (DE)**

(74) Vertreter: **Gottfried, Hans-Peter**
**Patentanwalt**
**Messering 8f**
**01067 Dresden (DE)**

(54) **COMPUTERIMPLEMENTIERTES VERFAHREN ZUR LÖSUNG EINES MULTIKRITERIELLEN OPTIMIERUNGSPROBLEMS, VORRICHTUNG ZUR DATENVERARBEITUNG, COMPUTERPROGRAMM UND DATENTRÄGERSIGNAL**

(57) Die Erfindung betrifft ein computerimplementiertes Verfahren zur Lösung eines multikriteriellen Optimierungsproblems als MIP-Problem mittels eines MIP-Solvers (38), wobei die Lösungsgeschwindigkeit in dem Computer so weit erhöht wird, dass die optimierte Lösung in Echtzeit ausgegeben wird, umfassend die Schritte a) Dekomposition des MIP-Problems in n lexikographische Stufen, b) Aufteilung des ursprünglichen MIP-Problems in ein Masterproblem und ein Subproblem (37), c) Lösung des Subproblems mittels eines enumerativen Verfahrens, wobei das enumerative Verfahrens zur Spaltenerzeugung auf einem Branch-and-Bound-Pricing-Verfahren beruht, d) Berechnung einer optimalen Lösung der LP-Relaxierung des n-ten Masterproblems und e) Berechnung einer ganzzahligen Lösung des n-ten Masterproblems auf Grundlage aller im Subproblem (37) erzeugten Spalten. Die Erfindung betrifft weiterhin eine Vorrichtung zur Datenverarbeitung, umfassend eine Leitstelle, einen Webclient, einen Mobilclient, ein Stammdatentool und ein Wegetool, wobei über das Stammdatentool (950) die individuellen Anforderungen des konkreten Optimierungsproblems und über das Wegetool die Räumlichkeiten des konkreten Optimierungsproblems als Datengrundlage einbezogen werden.

Fig. 3

**Beschreibung**

Die Erfindung betrifft ein computerimplementiertes Verfahren zur Lösung eines multikriteriellen Optimierungsproblems als MIP-Problem mittels eines MIP-Solvers, wobei die Lösungsgeschwindigkeit in dem Computer so weit erhöht wird, dass die Lösung in Echtzeit ausgegeben wird. Ein MIP-Problem ist ein Problem, welches durch ein gemischt-ganzzahliges lineares Programm (engl.: mixed-integer linear program, kurz MIP) dargestellt werden kann. Ein MIP-Solver ist ein Softwaretool zur Lösung von MIP-Problemen. Die Erfindung betrifft weiterhin eine Vorrichtung zur Datenverarbeitung, ein Computerprogramm und ein Datenträgersignal.

Mit der Problemstellung der Optimierung von multikriteriellen Optimierungsproblemen, beispielsweise von intrahospitalen Transporten, wird nach dem Stand der Technik zumeist versucht, die Problemstellung mithilfe von Heuristiken zu lösen. Heuristiken liefern in vielen Fällen zwar keine beweisbar optimale Lösung, aber haben häufig geringere Laufzeiten bis zur Lösungsfindung. Somit sollte die Dynamik der Problemstellung und die damit verbundenen geringen Zeiten, die für die Berechnung zur Verfügung stehen, besser berücksichtigt werden. So entwickelten beispielsweise von Elmbach et al. [Elmbach, Alexander F.; Scholl, Armin; Walter, Rico: Minimizing the maximal ergonomic burden in intrahospital patient transportation. In: European Journal of Operational Research 276 (2019), Nr. 3, S. 840-854] einen Algorithmus der auf der Heuristik *Tabu-Suche* basiert, um die maximale ergonomische Belastung der Transporteure bei krankenhausinternen Patiententransporten zu minimieren.

Auch Beaudry et al. [Beaudry, Alexandre; Laporte, Gilbert; Melo, Teresa; Nickel, Stefan: Dynamic transportation of patients in hospitals. In: OR spectrum 32 (2010), Nr. 1, S. 77-107], die ihren Fokus auf die Dynamik des Problems - mit ständig neu eintreffenden Transportanfragen legten - nutzen eine Heuristik basierend auf Tabu-Suche zur Lösung ihrer Problemstellung. Hanne et al. [Hanne, Thomas; Melo, Teresa; Nickel, Stefan: Bringing robustness to patient flow management through optimized patient transports in hospitals. In: Interfaces 39 (2009), Nr. 3, S. 241-255] verwenden in ihrem System *Opti-TRANS,* das zur Planung von Transporten im Krankenhaus entwickelt wurde, auch eine Heuristik zur Zuteilung der Transportaufträge auf die Mitarbeiter.

Bei exakten Verfahren besteht der Vorteil, dass man die Güte der Rechenergebnisse bestimmen kann und bei ausreichender Laufzeit sogar unter den Eingabedaten beweisbar optimale Ergebnisse erzielt. Deshalb wird ein exaktes Verfahren, wenn es vollständig lösen kann, mindestens genauso gute, meistens sogar bessere Ergebnisse erzielen als jede Heuristik.

Kallrath [Kallrath, Julia: Online storage systems and transportation problems with applications: optimization models and mathematical solutions. Bd. 91. Springer Science & Business Media, 2006] beschreibt solche exakten Methoden zur Lösung eines Transportproblems im Krankenhaus. Hierzu verwendete sie - ähnlich wie wir - einen enumerativen Ansatz zur Lösung des Subproblems innerhalb eines Spaltenerzeugungsverfahrens. Jedoch basiert die Enumeration von Kallrath [7], darauf alle Kombination (also Spalten ohne Reihenfolge) aufzuzählen. Das sind zwar grundsätzlich weniger aufzuzählende Elemente, jedoch ist es so schwieriger große Teile der Spaltenlösungsmenge auszuschließen. Somit erklärte sie in ihrem Fazit, das mit der von ihr entwickelten, exakten Methode lediglich kleine Instanzen hinreichend schnell gelöst werden können und für größere Instanzen aufgrund der Laufzeiten auf Heuristiken zurückgegriffen wurde.

Anpassungen der Prozesse in Krankenhäusern sind mit Blick auf den akuten Fachkräftemangel im Pflegebereich, die steigenden Fallzahlen bei geringerer Verweildauer der Patienten und die damit einhergehende Überbelastung des Personals zwingend notwendig. Selbstplanende Softwareprodukte zur Organisation von Transporten im Krankenhaus, was die Lösung für die o. g. Problematik wäre, gibt es jedoch kaum auf dem Markt, insbesondere ein Softwaretool auf Basis mathematischer Optimierung existiert nicht. Abgesehen davon lässt sich zusammenfassend für den Spezialfall der Optimierung von intrahospitalen Transporten sagen, dass die in wissenschaftlichen Publikationen entwickelten und präsentierten Verfahren im exakten Fall aufgrund ihrer Rechenzeit für den Praxiseinsatz nicht tauglich waren. Im Fall von heuristischen Lösungen können keine beweisbar optimalen Ergebnisse geliefert werden. Darüber hinaus sind bei Heuristiken auch in weiten Teilen keine Gütegarantien möglich. Auf dem Markt für Logistik-Software von Krankenhäusern gibt es kaum selbstplanende Systeme. In vielen Fällen werden die Transporte noch von einem menschlichen Disponenten organisiert und verteilt, der von entsprechender Software lediglich dabei unterstützt wird.

Im Logistikbereich, beispielsweise in großen Krankenhäusern, Alten- und Pflegeheimen, hat die softwaregestützte Planung interner Prozesse deutlich an Relevanz gewonnen.

Dies liegt vor allem an der zunehmenden Zentralisierung medizinischer Einrichtungen bei gleichzeitig steigenden Patientenzahlen. Ein Kernprozess der Krankenhauslogistik ist die Organisation sogenannter intrahospitaler Transporte. Bei deren Planung geht es vorwiegend darum, Transporte innerhalb eines Krankenhauses optimal auf personelle Ressourcen des Transportdienstes zu verteilen, also auf Krankenhausmitarbeiter, die Patienten oder Krankenhausmaterial innerhalb der Klinik transportieren. Ein zentrales Ziel dabei ist es, zu gewährleisten, dass die Transportaufträge auf verfügbare Transporteure in bestmöglicher Bearbeitungsreihenfolge verteilt werden, damit die Transportaufträge auch fristgerecht, d.h. möglichst ohne Verspätungen, erfüllt werden können. Ein weiteres Ziel könnte jedoch auch sein, dass unnötige Laufwege des Transportdienstes vermieden werden oder eine möglichst gleichmäßige Arbeitsauslastung aller eingeplanten Mitarbeiter sichergestellt wird. Jedoch sind darüber hinaus auch andere klinikspezifische Optimierungsziele vorstellbar.

Naturgemäß ergeben sich im Krankenhausbetrieb kurzfristig und kontinuierlich neue Transportaufträge unterschiedlichster Priorität, die zeitnah eingeplant werden müssen. Diese kurzfristige Planung erfordert vom berechnenden System überaus kurze Antwortzeiten, sodass für die handelnden Akteure keine zu langen Wartezeiten entstehen und eine eventuelle Planung auch zügig umgesetzt werden kann.

Das Planungs- und Dispositionssystem soll auf einem vom Krankenhaus bereitgestellten Server mit einer dafür üblichen technischen Ausstattung laufen. Das heißt, das System muss auf Grundlage der bereitgestellten Hardware dynamisch auf die sich ständig ändernden Gegebenheiten reagieren können, sodass eine zeitnahe Jobverteilung an die Transportmitarbeiter sichergestellt ist. Diese können die geplanten und verteilten Transportaufträge, die ihnen auf ihre mobilen Endgeräte bzw. Handhelds übermittelt werden, somit im gewünschten zeitlichen Rahmen ausführen.

Das Einsparpotenzial für die Organisation der internen Krankenhauslogistik, welches in der automatisierten und insbesondere der mathematisch optimierten Planung von Transporten liegt, wird gegenwärtig jedoch nicht ausgeschöpft. Dies liegt daran, dass die Verfahren die dem Stand der Technik entsprechen entweder nicht ausreichend gute Ergebnisse erzielen oder ihre Lösungszeiten auf der standardmäßigen Hardware in Krankenhäusern zu lange sind, um sie in den Prozess der Transportplanung einzubinden.

Es ist daher die Aufgabe der vorliegenden Erfindung, ein computerimplementiertes Verfahren zur Lösung eines multikriteriellen Optimierungsproblems anzubieten, bei dem die Lösungsgeschwindigkeit in dem Computer so weit erhöht wird, dass die Lösung in Echtzeit ausgegeben werden kann. Weitere Aufgaben der Erfindung betreffen eine Vorrichtung zur Datenverarbeitung, ein Computerprogramm und ein Datenträgersignal für das computerimplementierte Verfahren zur Lösung eines multikriteriellen Optimierungsproblems.

Die Aufgabe wird gelöst durch ein computerimplementiertes Verfahren zur Lösung eines multikriteriellen Optimierungsproblems als MIP-Problem mittels eines MIP-Solvers, wobei die Lösungsgeschwindigkeit in dem Computer so weit erhöht wird, dass die Lösung in Echtzeit ausgegeben wird. Das Verfahren umfasst die Schritte:

- Dekomposition des MIP-Problems in n lexikographische Stufen, wobei in jeder der Stufen eine separate Zielfunktion optimiert wird, wobei die Zielfunktionen priorisiert sind mit dem Ziel einer Optimierungsabfolge,
- Aufteilung der n lexikographischen Stufen in jeweils ein Masterproblem und ein Subproblem, sodass sich aus dem ursprünglichen MIP-Modell 2n Teilprobleme ergeben,
- Lösen zumindest eines Teils der n Subprobleme mittels eines enumerativen Verfahrens. Das enumerative Verfahren zur Spaltenerzeugung beruht auf einem Branch-and-Bound-Pricing-Verfahren, wobei für zumindest einen Teil der lexikographischen Stufen das Branch-and-Bound-Pricing-Verfahren angewandt wird und dabei der Branch-and-Bound-Baum effektiv abgeschnitten wird. Dabei werden keine Spalten für die Nebenbedingungsmatrix des Masterproblems von dem Branch-and-Bound-Baum abgeschnitten. Im Falle eines zu optimierenden Transportproblems werden dann keine optimalen Routen von dem Branch-and-Bound-Baum abgeschnitten.
- Berechnung einer optimalen Lösung der LP-Relaxierung des n-ten Masterproblems. Als LP-Relaxation (abgeleitet von Lineare Programmierung) wird bezeichnet, wenn bei einem Problem der ganzzahligen linearen Optimierung die Forderung der Ganzzahligkeit aufgegeben wird.
- Berechnung einer ganzzahligen Lösung des n-ten Masterproblems auf Grundlage aller im Subproblem erzeugten Spalten. Diese ganzzahlige Lösung bildet das finale Ergebnis des Verfahrens und wird fortan als optimierte Lösung bezeichnet.

Das Branch-and-Bound-Pricing-Verfahren (vgl. Krumke: KRUMKE, S.; RAMBAU, J.; TORRES, L.: Real-time dispatching of guided and unguided automobile service units with soft time windows. In: European Symposium on Algorithms Springer, 2002, S. 637-648), ist ein Spaltenenumerationsverfahren in dem ein Branch-and-Bound-Baum bestehend aus Spalten für die Nebenbedingungsmatrix eines Masterproblems aufgebaut wird. Das "Branching" in diesem Verfahren beschreibt die Art und Weise, wie der Baum aufgebaut wird. Mithilfe des "Bounding" ist es möglich den Branch-and-Bound-Baum effektiv abzuschneiden, um so nicht alle Spalten des Masterproblems explizit aufzählen zu müssen, sondern nur die für eine Optimallösung der LP-Relaxierung des Masterproblems tatsächlich relevanten Spalten. Vorteil des Verfahrens ist weiterhin, dass dabei keine optimalen Spalten der Optimallösung der LP-Relaxierung des Masterproblem abgeschnitten werden.

Ein praktisches Problem, das durch die Erfindung gelöst wird, kann der theoretischen Problemklasse der *Vehicle-Routing-Problems with time windows (VRPTW)* (vgl. Toth und Vigo [Toth, Paolo; Vigo, Daniele: The vehicle routing problem. SIAM, 2002]) zugeordnet werden. Der Lösungsansatz, das *Vehicle-Routing-Problem* als ein integriertes mathematisches Modell aufzustellen und die sich daraus ergebende Formulierung als ein MIP-Problem mit einem kommerziellen Solver zu lösen, erwies sich für den Echtzeiteinsatz als zu laufzeitintensiv. So überschreiten hier beispielsweise bereits Berechnungen von Datensätzen realer Krankenhäuser und für mittlere bis große Instanzen die Rechenzeitvorgabe von 60 Sekunden deutlich. Somit ist es im Realbetrieb im Fall der Anwendung auf eine Transportoptimierung nicht möglich, zur Problemlösung und zur Erstellung eines Transportplans ausschließlich einen MIP-Solver zu verwenden.

Deshalb wird zunächst ein Dekompositionsansatz gewählt, um die Komplexität des Gesamtproblems auf mehrere Teilprobleme aufzuteilen und somit die Rechenzeit zu verkürzen. Die Dekomposition kann hierbei mehrstufig erfolgen, sodass in einem Berechnungslauf mehrere (beispielsweise n = 3) Optimierungsziele verfolgt werden können. Dabei wird in jeder Stufe der Dekomposition eine separate Zielfunktion optimiert. Die Problemlösung folgt hierbei einer lexikographischen Ordnung (zur lexikographischen Optimierung vgl. Isermann [Isermann, H: Linear lexicographic optimization. In: Operations-Research-Spektrum 4 (1982), Nr. 4, S. 223-228]).

Bei der lexikographischen Optimierung ist es nicht möglich, durch Veränderung der Lösung auf einer lexikographisch niedrigeren Ebene den Zielfunktionswert einer höher priorisierten Zielfunktion zu verschlechtern. Deshalb müssen die Zielfunktionen klar priorisiert werden, sodass eine sinnvolle Optimierungsabfolge entsteht. Daher erfolgt die Dekomposition des MIP-Problems in n lexikographische Stufen, wobei in jeder der Stufen eine separate Zielfunktion optimiert wird. Die Zielfunktionen sind priorisiert mit dem Ziel einer Optimierungsabfolge.

Als weiterer Schritt, um das zugrundeliegende Problem einer - im Sinne der obligaten Echtzeitausführung - Überbelastung der Rechentechnik zu lösen, ist die Aufteilung des ursprünglichen MIP-Problems in ein Masterproblem und ein Subproblem bei jeder der lexikographischen Stufen vorgesehen. Dadurch ergeben sich aus dem ursprünglichen MIP-Modell 2n Teilprobleme. Das heißt, die ursprüngliche Problemformulierung wird für jede Stufe des lexikographischen Verfahrens in ein Master- und ein Subproblem aufgeteilt, sodass sich aus dem ursprünglichen MIP-Modell durch Reformulierung 2n Teilprobleme ergeben, wobei n der Anzahl der lexikographischen Stufen entspricht.

Hauptaufgabe des Subproblems bei der Dekomposition ist es, gültige Auftragsrouten (Spalten einer Nebenbedingungsmatrix im Masterproblem) zu generieren, die dann vom Masterproblem zu optimierten Transportplänen zusammengesetzt werden. Durch die erneute Dekomposition ist es bereits gelungen, das Masterproblem hinreichend schnell und mit hinreichender Lösungsgüte zu lösen. Hinreichend ist die Lösungsgüte dann, wenn sie höchstens 5 %, bevorzugt 3 % und besonders bevorzugt 1 % von der mathematisch beweisbaren bestmöglichen Lösung abweicht.

Allerdings hat es sich gezeigt, dass es immer noch zu zeitaufwendig ist, das Subproblem als gemischt-ganzzahliges Problem von einem bekannten Solver, der auf einem verfügbaren, handelsüblichen Computer ausgeführt wird, lösen zu lassen. Deshalb wurde ein dritter Verfahrensschritt eingeführt, um zu dem erfindungsgemäßen Verfahren zu gelangen. Dessen Grundidee ist die Lösung des Subproblems mittels eines enumerativen Verfahrens, bei dem es das Ziel ist, alle Lösungsmöglichkeiten effizient aufzuzählen. Dafür müssten jedoch sämtliche Routen aus allen prinzipiell möglichen Auftragsvariationen (d. h. Kombinationen unter Berücksichtigung der Reihenfolge) konstruiert werden. Da dies jedoch exponentiell viele sind, wurde vorab versucht, durch geschicktes Ausschließen aufgrund mathematischer Kennzahlen nicht alle bzw. nur die für eine Optimallösung später wirklich relevanten Routen erzeugen zu müssen.

Das geschickte Ausschließen führt zum zentralen Element der Erfindung, den Spaltenerzeugungsalgorithmus, insbesondere zur Optimierung von Transporten im Krankenhaus. Der Spaltenerzeugungsalgorithmus entstammt dem Gebiet der mathematischen Optimierung bzw. *Operations Research* als Teilgebiet der angewandten Mathematik, wird gemäß der Erfindung aber technisch umgesetzt und in das erfindungsgemäße Verfahren integriert, um zu einer besseren Nutzung der Ressourcen eines Computers zu gelangen mit dem Ziel, auch bei für eine Echtzeitanwendung grundsätzlich unzureichender Rechenleistung dennoch eine Echtzeitlösung zu erzielen.

Darüber basiert die tatsächliche Implementierung und technische Umsetzung auf grundlegenden Kenntnissen im Bereich der Informationstechnik und Informatik, um die Computerressourcen effizient zu nutzen. Hierauf wird unten näher eingegangen.

Bevorzugt erfolgt das Aufteilen der lexikographischen Stufen in ein Masterproblem und ein Subproblem durch eine Dantzig-Wolfe-Dekomposition. Damit gelingt es, die Lösungszeiten des Verfahrens weiter zu verkürzen. (vgl. Dantzig und Wolfe [Dantzig, George B.; Wolfe, Philip: Decomposition principle for linear programs. In: Operations research 8 (1960), Nr. 1, S. 101-111])

Bevorzugt wird als das multikriterielle Optimierungsproblem ein Vehicle-Routing-Problem aus der Logistik zum Finden optimierter Auftragsrouten gelöst.

Es hat sich als vorteilhaft erwiesen, wenn das Subproblem gültige Auftragsrouten als Spalten für die Nebenbedingungsmatrix im Masterproblem generiert, wobei die Auftragsrouten vom Masterproblem zu optimierten Transportplänen zusammengesetzt werden. Jedem Masterproblem ist eine Nebenbedingungsmatrix zugeordnet. Bevorzugt ist das enumerative Verfahren zu einer Spaltenerzeugung aufgrund von insbesondere mathematischen Kennzahlen ausgestaltet und nur die für eine optimale Lösung relevanten Auftragsrouten erzeugt und die übrigen, aus allen prinzipiell möglichen Auftragsvarianten möglichen Routen ausgeschlossen werden.

Ein allgemeines Modell eines Masterproblems in der m-ten lexikographischen Stufe kann folgendermaßen formuliert werden:

$$(MP_m) \quad \min_x \quad \sum_{r \in R} c_r^m x_r \qquad (1)$$

$$s.t. \quad \sum_{r \in R} a_{i,r} x_r \geq 1 \qquad \forall i \in V \qquad\qquad (2)$$

$$\sum_{r \in R} a_{k,r} x_r = 1 \qquad \forall k \in K \qquad\qquad (3)$$

$$\sum_{r \in R} c_r^l x_r \leq \alpha_l S_l \qquad \forall l \in L \qquad\qquad (4)$$

$$x_r \in \mathbb{Z}_+ \qquad \forall r \in R. \qquad\qquad (5)$$

Die nachfolgende Beschreibung des obigen Modells ($MP_m$) erfolgt aufgrund der besseren Verständlichkeit wieder am Beispiel eines Transport-Optimierungsproblems in einem Krankenhaus, ist aber in dieser Form für eine Vielzahl vergleichbarer Anwendungsfälle gültig. Die Indexmenge $V \in \mathbb{N}$ in ($MP_m$) entspricht Transportaufträgen, Indexmenge $K \in \mathbb{N}$ Transportmitarbeitern und $R$ Mitarbeiterrouten (die aus einer Abfolge von Aufträgen entstehen). Die Indexmenge $L = \{1,..., (m - 1)\}$ enthält alle höher priorisierten lexikographischen Stufen $1,..., (m - 1)$ bis zur aktuellen, $m$-ten, Stufe. Für die Nebenbedingungsmatrix $A$ gilt:

$$A = (a_{j,r})_{\substack{j \in V \cup K \\ r \in R}} \in \{0, 1\}^{|V|+|K| \times |R|}$$

Die Kosten einer Route $r \in R$ sind beschrieben durch $c_r^m \in \mathbb{R}$ für alle lexikographischen Stufen $m \in \{1,...,n\}$.

Die Zielfunktion (1) sorgt dafür, dass die Kosten formuliert in der aktuellen ($m$-ten) lexikographischen Stufe minimiert werden. Nebenbedingung (2) stellt sicher, dass jeder Transportauftrag ausgeführt wird, und Nebenbedingung (3) garantiert, dass jedem Transportmitarbeiter genau eine Route zugewiesen wird. Mittels Ungleichung (4) werden die höher priorisierten lexikographischen Stufen $1,..., (m - 1)$ in Modell ($MP_m$) berücksichtigt und sichergestellt, dass sich deren Zielfunktion maximal um den Parameter $\alpha_l \geq 1$ mit l $\in$ L verschlechtern.

Für eine Optimallösung der Masterprobleme ($MP_m$) auf den einzelnen lexikographischen Stufen $m > \{1,...,n\}$ und damit auch für die Lösung des Gesamtproblems sind ausschließlich Routen (Spalten der Nebenbedingungsmatrix) relevant, die negative reduzierte Kosten innerhalb des Spaltenerzeugungsverfahrens besitzen.

Allgemein ergeben sich die reduzierten Kosten $RK_m(r)$ einer Spalte in der m-ten lexikographischen Stufe, mit $m > \{1,... ,n\}$, wie folgt:

$$RK_m(r) := c_r^m - \sum_{i \in V} a_{i,r} \bar{\pi}_i - \sum_{k \in K} a_{k,r} \bar{\pi}_k + \sum_{l \in L} c_r^l \bar{\mu}_l \qquad\qquad (6)$$

Um weitere nicht relevante Spalten $r' \in R$, die im Enumerationsprozess aus einer gewissen Spalte $r \in R$ hervorgehen würden, im Branch-and-Bound-Baum einer lexikographischen Stufe m ggf. abschneiden zu können wird eine untere Schranke für die reduzierten Kosten dieser Spalten r' e R berechnet:

$$LB_m(r) := RK_m(r) - tmg_m(r, \ell) \leq RK_m(\bar{r}) \qquad\qquad (7)$$

Sobald diese Untere Schranke $LB_m(r)$ aus (7) für eine Spalte $r \in R$ echt größer als null ist $LB_m(r) > 0$, ist klar, dass aus r keine Spalten mit negativen Kosten mehr entstehen können, deshalb kann der Branch-and-Bound-Baum unterhalb von $r$ abgeschnitten werden. Der Parameter *total maximal gain, $tmg_m(r, \ell)$* in (7), der angibt um welchen Betrag die reduzierten Kosten $RK_m(\bar{r})$ von Spalten $\bar{r}$, die sich aus der Spalte $r$ im Enumerationsverfahren ergeben können, im Vergleich zu den reduzierten Kosten $RK_m(r)$ verringern können, berechnet sich folgendermaßen:

$$tmg_m(r, \ell) := max \left\{ \sum_{i \in V} \left( \bar{\pi}_i - f^m(i, r) - \sum_{l \in L} f^l(i, r) \bar{\mu}_l \right) \mid i \in E := \{i \in V \mid a_{i,r} = 0\}, |E| \le \ell - \sum_{i \in V} a_{i,r} \right\},$$

mit Optimalwerten $\overline{\pi}_i$ der Dualvariablen zu Nebenbedingung (2) und $\overline{\mu}_l$, zu Nebenbedingung (4) gehörend. Außerdem sind $f^m, f^l$: $V \times \mathbb{R} \rightarrow \mathbb{R}$, $m, l \in \{1, ..., n\}$ Funktionen, die den Zuwachs an primalen Kosten der jeweiligen lexikographischen Stufe gut abschätzen, wenn Transportauftrag $i$ zu Route $r$ hinzukommt.

Auf Grund des Prinzips des *Dynamic Pricing Control* bei der Spaltenerzeugung (vgl. Krumke: KRUMKE, S.; RAMBAU, J.; TORRES, L.: Real-time dispatching of guided and unguided automobile service units with soft time windows. In: European Symposium on Algorithms Springer, 2002, S. 637-648), ist es notwendig, $tmg_m (r, \ell)$ für jeweils eine bestimmte Suchraumgröße zu berechnen. Diese Suchraumgröße wird unter anderem und insbesondere durch den Parameter $\ell \in \{1, ..., |V|\}$ definiert.

Der nachfolgend dargestellte Algorithmus 1 stellt eine Methode zur sequenz-abhängigen Enumeration von Spalten, insbesondere auch Auftragsrouten bei der Transportoptimierung in einem Krankenhaus, dar. Auf der Breitensuche basierend, enumeriert er (für Akzeptanz-Grenzwert $a = 0$; wurde auf $a = 0$ gesetzt, um zunächst einmal alle Spalten mit negativen reduzierten Kosten zu generieren) alle zulässigen Routen mit negativen reduzierten Kosten (vgl. Zeile 14 - 15 in Algorithmus 1). Um nicht alle Routen explizit aufzählen zu müssen, werden anhand oben beschriebener mathematischer Kennzahlen gewisse Teile des durch Algorithmus 1 aufgespannten Enumerationsbaums ausgeschlossen (vgl. Zeilen 18 — 22 in Algorithmus 1). Somit wird das Verfahren enorm beschleunigt.

---

**Algorithmus 1 :** Sᴇǫᴜᴇɴᴄᴇ-Dᴇᴘᴇɴᴅᴇɴᴛ Eɴᴜᴍᴇʀᴀᴛɪᴏɴ Aʟɢᴏʀɪᴛʜᴍ

**Input** : Set of transport orders $V$, transporter $k \in K$ and search depth $\ell$, Optimal Dual Values $\bar{\pi} \in \mathbb{R}^{|V|+|K|}$, lexikographic level $m$, acceptance threshold $a$

**Output** : An enumeration tree, that enumerates all routes with maximum node depth of $\ell$ corresponding to column variations with negative reduced costs

1 **Initialize:**
2     $Q \leftarrow \varnothing, r_0 \leftarrow 0, a_{d,r_0} \leftarrow 0 \,\forall i \in V, s_{r_0} \leftarrow ()_{i \in V}.$
3     $Q \leftarrow Q \cup \{r_0\}.$
4     $COL \leftarrow \varnothing$
5 **while** $Q \ne \varnothing$ **do**
6     Choose $r \in Q$.
7     $Q \leftarrow Q \setminus \{r\}.$
8     **for** $i \in V$ **do**
9        **if** $a_{i,r} < 0$ **then**
10           $r_{new} \leftarrow r + 1$
11           $s_{r_{new}} \leftarrow s_r \times (i)$
12           $A_{V,r_{new}} \leftarrow A_{V,r}$
13           $a_{k,r_{new}} \leftarrow a_{k,r} + 1$
          // Determine reduced costs for $r_{new}$ as in (6)
14           $R_m(r_{new}) = c_r^m - \sum_{i \in V} a_{i,r_{new}} \pi_i - \bar{\pi}_k + \sum_{l \in L} c_r^l \mu_l$
15           **if** $R_m(r_{new}) < a$ **and Route is feasible then**
16              $COL \leftarrow COL \cup \{(A_{V,r_{new}}, A_{K,r_{new}}, w_{S,r_{new}})\}$
17           **end**
          // $lb(r_{new})$ is lower bound of $R_m(\bar{r})$, $\forall$ routes $\bar{r}$ that result from $r$ during enumeration.
18           **if** $LB_m(r_{new}) < a$ **then**
19              **if** $\ell(r_{new}) < \ell$ **then**
20                 $Q \leftarrow Q \cup r_{new}$
21              **end**
22           **end**
23        **end**
24     **end**
25 **end**
26 **return** $COL$

---

Der nachfolgend dargestellte Algorithmus 2 ist eine Methode zur Lösung eines multikriteriellen Problems, d. h. eines Problems mit mehreren Zielfunktionen, wie dem Transport-Optimierungsproblem. Die Methode basiert auf dem Prinzip der *Dynamic Pricing Control* bei dem der Suchraum sukzessive vergrößert wird, sodass der "Suchaufwand" zu Beginn des Verfahrens, wenn die dualen Variablen noch keine stabilen Werte annehmen, gering ist. Jedoch ist das Suchverfahren später im Enumerations-Prozess exakt, wenn die dualen Informationen verlässlicher sind.

---

**Algorithmus 2 :** LEXIKOGRAPHIC COLUMN GENERATION ALGORITHM

**Input** : Problem instance of an Application of form $(MP_m)$ with $m \in \{1, \ldots, n\}$ lexikographic levels.

**Output** : LP-Optimal solution of the problem instance.

1  Initialize $\ell$, $s\ell$, $b$, $sb$, $a$, $L_{max} = \sum_{d \in D} a_d^{max}$

2  Execute starting heuristic to generate initial columns $COL$ with indices $r \in \tilde{R}$.

3  $gen \leftarrow COL$.

4  **while** $\ell < L_{max}$ **and** $b < |D|$ **do**

5      $\ell \leftarrow min(\ell + s\ell, L_{max})$ and $b \leftarrow min(b + sb, |D|)$

    `// Execute Column Enumeration for each lexikographic level.`

6      **for** $m = 1, \ldots, n$ **do**

7          **while** $|gen| > 0$ **and** $a < 0$ **do**

8              $x_{LP}^* :=$ Sol. of LP relaxation of $(MP_m)$ with $\tilde{R}$ routes.

9              $\tilde{V} \leftarrow$ Sort orders $i \in V$ and cut after $b$-th order.

10             **for** $k \in K$ **do**

11

12                 $gen \leftarrow$ Sequence-Dependent Enumeration Algorithm $(\tilde{V}, k, \ell, a)$

13                 $COL \leftarrow COL \cup gen$

14                 Update index set $\tilde{P}$ of $COL$.

15                 Update $a$ corresponding to the number of generated colums in $gen$

16             **end**

17         **end**

18         $x_m^* :=$ Solution of $(MP_m)$ with $COL$

19     **end**

20 **end**

21 **return** Solution $x_M^*$

---

Die Begrenzung des Suchraums im Verfahren erfolgt über die Parameter $\ell$ und b, und die sukzessive Vergrößerung kann über die Schrittweiten $s\ell$ und sb gesteuert werden. Darüber hinaus liefert der sich selbst anpassende Akzeptanz-Grenzwert $a \geq 0$ noch eine Möglichkeit, die Anzahl der gesuchten Spalten mit negativen reduzierten Kosten zu begrenzen. Dies trägt wiederum dazu bei, den Suchaufwand in verschiedenen Stadien des Lösungsprozesses zu regulieren.

Eine weitere Beschleunigung der Bereitstellung einer Lösung wird erreicht, indem noch gültige und/oder zulässige optimierte Auftragsrouten einer vorherigen Berechnung zu einer zusätzlichen Erhöhung der Lösungsgeschwindigkeit wiederverwendet werden. Bei einem bevorzugten Einsatzgebiet der vorliegenden Erfindung werden optimierte Auftragsrouten für Transporte in einem Krankenhaus ermittelt.

Die erfindungsgemäße Aufgabe wird ebenfalls gelöst durch eine Vorrichtung zur Datenverarbeitung, umfassend Mittel zur Ausführung der Schritte des Verfahrens, wie es oben beschrieben wurde. Die Vorrichtung umfasst eine Leitstelle, einen Webclient, einen Mobilclient, ein Stammdatentool und ein Wegetool, wobei über das Stammdatentool die individuellen Anforderungen des konkreten Optimierungsproblems, z. B. des Krankenhauses und über das Wegetool die Räumlichkeiten des konkreten Optimierungsproblems, z. B. mittels eines Knoten-Kanten-Netzwerks eines Krankenhauses als Datengrundlage für das Verfahren einbezogen werden.

Eine vorgesehene Servertopologie, hier beispielhaft bezogen auf die Transportlogistik des Krankenhauses, gliedert sich im Wesentlichen in zwei Netzwerke, die aus Sicherheits- und Datenschutzgründen durch eine Firewall getrennt sind. Auf der einen Seite steht das Server-LAN mit Webserver (Präsentationsschicht), Datenbankserver (Persistenzschicht) und Automatikserver (Compute-Layer). Auf der anderen Seite der Firewall steht das Client-LAN, in dem sich alle stationären und mobilen Endgeräte des Krankenhauses befinden. Diese kommunizieren geschützt durch die Firewall ausschließlich über vordefinierte Verbindungen mit dem Webserver, der wiederum innerhalb des Server-LANs die Daten vom Datenbankserver bezieht. Dies sind insbesondere Zuweisungsdaten.

Der Automatikserver holt sich Inputdaten für die Aufträge, nachfolgend als Input- und Auftragsdaten bezeichnet, vom Datenbankserver, führt anschließend alle notwendigen Berechnungen durch, bevor er die entsprechenden Outputdaten für die Zuweisungen, als Zuweisungs- und Outputdaten bezeichnet, in die entsprechende Datenbankinstanz zurückschreibt. Als zentraler Server für alle Berechnungen beinhaltet der Automatikserver u. a. eine Installation des erfindungsgemäßen Verfahrens zur Lösung eines multikriteriellen Optimierungsproblems als MIP-Problem mittels eines MIP-Solvers. Die Integration des Verfahrens erfolgt somit in die beschriebene Servertopologie.

Darüber hinaus und ein Stück weit losgelöst von der Servertopologie, gibt es noch ein Stammdatentool mit dessen Hilfe die speziellen Anforderungen eines jeden Krankenhauses individuell ausgestaltet werden können. Durch das CAD-Tool, auch als Wegetool bezeichnet, kann ein Knoten-Kanten-Netzwerk (mathematisch gesehen ein gerichteter Graph) erstellt werden, das die Räumlichkeiten des jeweiligen Klinikums genau abbildet. Mithilfe dieser beiden Software-Produktkomponenten wird gewissermaßen die Datengrundlage für die Planungs- und Dispositionsberechnungen geschaffen, deren Ergebnisse über verschiedenen Arten von Endgeräten schließlich dem Anwender visualisiert werden können.

In einem Echtzeitsystem ist es erforderlich, dass die Geschwindigkeit der Datenübertragung den Anforderungen der Anwendung gerecht wird. Dabei müssen sowohl Anforderung an die technische Grundausstattung (CPU, RAM, Betriebssystem etc.) der Betriebskomponenten erfüllt werden, als auch ein schneller Datenaustausch auf Basis einer qualitativ hochwertigen Datenhaltung sichergestellt werden.

Die Leistungskennzahlen einer Standardtopologie eines Krankenhauses würden im dynamischen Kontext eines Echtzeitsystems nicht ausreichen, um für den Anwender in hinreichend kurzer Zeit von bis zu 80 s, insbesondere bis zu 60 s, besonders bevorzugt bis zu 30 s, entsprechende Lösungsdaten bereitzustellen. Die in der Anwendung entstehenden Aufgabenstellungen sind komplex und ihre Schwierigkeit wächst mit der Menge der Eingabedaten. Die vom Datenbankserver an den Automatikserver übergebenen Datenpakete lösen dadurch zu lange Antwortzeiten aus. Zusammengefasst heißt das, die wachsende Zahl der Lösungsmöglichkeiten ist mit einem handelsüblichen Rechner nicht in adäquater, den praktischen Erfordernissen entsprechender Antwortzeit zu berechnen.

Darüber hinaus ist dieser "Flaschenhals" allein durch technische Hochrüstung der Serverfarm im möglichen Rahmen eines Klinikums nicht zu beseitigen, da allein durch eine technische Hochrüstung nicht sichergestellt ist, dass die Laufzeiten des Solvers sich in dem Maße verbessern, dass eine Verwendung in einem Echtzeitbetrieb möglich wird. Abgesehen von diesem Aspekt ist auch eine hinreichende technische Hochrüstung aus wirtschaftlichen Gründen nicht möglich bzw. sinnvoll.

Der vorgenannte Algorithmus schafft es durch Dekomposition des Ausgangsproblems diesen Flaschenhals zu umgehen und die Antworten in adäquaten Zeitdauern für ein Echtzeitsystem zur Verfügung zu stellen. Die vorliegende Erfindung macht somit erstmals die Verwendung eines state-of-the-art MIP-Solvers für eine Lösung eines multikriteriellen Optimierungsproblems als MIP-Problem mittels eines MIP-Solvers auf einer herkömmlichen technischen Infrastruktur möglich, wobei die Lösung in Echtzeit ausgegeben wird. Die technische Infrastruktur ist beispielsweise die technische Infrastruktur einer Einrichtung des Gesundheitswesens.

Vorteilhafterweise umfasst die Servertopologie einen Webserver, einen Datenbankserver und einen Automatikserver, wobei der Webserver als Präsentationsschicht der Software als Webanwendung, der Datenbankserver als Persistenzschicht für alle Daten der Software und der Automatikserver als Compute-Layer für die Auftragsberechnung dient und alle notwendigen Module, einschließlich des MIP-Solvers, enthält.

Als besonders vorteilhaft hat es sich erwiesen, wenn der Webserver, der Datenbankserver und der Automatikserver in einem Server-LAN verbunden sind, das über eine Firewall mit einem Client-LAN, die mit stationären und mobilen Endgeräten, zumindest mit einer Leitstelle, verbunden ist, bevorzugt auch mit dem Webclient und Mobilclient.

Eine weitere vorteilhafte Ausführungsform der erfindungsgemäßen Vorrichtung zur Datenverarbeitung ist in der Weise ausgestaltet, dass über das Server-LAN der Webserver Daten, vor allem Zuweisungs- und Outputdaten, vom Datenbankserver bezieht, der Automatikserver Input- und Auftragsdaten vom Datenbankserver bezieht und anschließend alle notwendigen Berechnungen durchführt, bevor er die entsprechenden Zuweisungs- und Outputdaten in die entsprechende Instanz des Datenbankservers zurückschreibt.

Die Aufgabe der vorliegenden Erfindung wird weiterhin gelöst durch ein Computerprogramm, umfassend Befehle, die bei der Ausführung des Programms durch einen Computer diesen veranlassen, die Schritte des zuvor beschriebenen Verfahrens auszuführen.

Ein weiterer Aspekt der vorliegenden Erfindung betrifft ein Datenträgersignal, das das vorgenannte Computerprogramm überträgt. Dieses kann im Internet zum Download bereitgestellt werden oder auf einem beliebigen Datenträger verfügbar gemacht werden. Auf diese Weise gelangt es zu der Vorrichtung zur Datenverarbeitung, um dort in dessen Speichereinrichtung installiert und nachfolgend in dessen Prozessor ausgeführt zu werden.

Die vorliegende Erfindung ermöglicht es unter Verwendung bestehender mathematischer Tools, insbesondere eines an sich bekannten MIP-Solvers, mehrere Zielkennzahlen gleichzeitig zu optimieren und diese Ergebnisse in hinreichend kurzen Rechenzeiten zu generieren, sodass das System auch bei der begrenzten Rechenleistung eines handelsüblichen *Personal Computers* (Maschine mit 2,30 GHz (2.40 GHz) Intel-Core i5-6200U , ausgestattet mit 8 GB RAM, unter dem Betriebssystem Windows 10, Version 1803) auch für einen Echtzeitbetrieb im Krankenhauswesen einsetzbar ist.

Anhand der Beschreibung von Ausführungsbeispielen und ihrer Darstellung in den zugehörigen Zeichnungen wird die Erfindung nachfolgend näher erläutert. Es zeigen:

Fig. 1: Schema von Bestandteilen eines Transportauftrags in einem Krankenhaus;
Fig. 2: Schema einer Zuweisung der Transport-Aufträge auf die Transporteure;
Fig. 3: schematisch eine Ausführungsform einer erfindungsgemäßen Abfolge der zwei durchgeführten Dekompositionen anhand von drei beispielhaften Zielfunktionen;
Fig. 4: schematisch eine Darstellung einer Ausführungsform eines Branch-and-Bound-Baums mit abgeschnittenen Teilbäumen bei der Spalten-Erzeugung im Subproblem;
Fig. 5: ein schematisches Schaubild des Prinzips der Spaltenerzeugung;
Fig. 6: Ablaufdiagramm des Spaltenerzeugungsalgorithmus;
Fig. 7: ein schematisches Schaubild eines beispielhaften Sequenzdiagramms der Auftragsdurchführung;
Fig. 8: schematisch eine Ansicht einer Ausführungsform einer erfindungsgemäßen Vorrichung zur Datenverarbeitung, insbesondere eine Topologie der Krankenhaus-Server und
Fig. 9: eine beispielhafte Übersicht über Bestandteile des Systems zur Planung von Transporten im Krankenhaus.

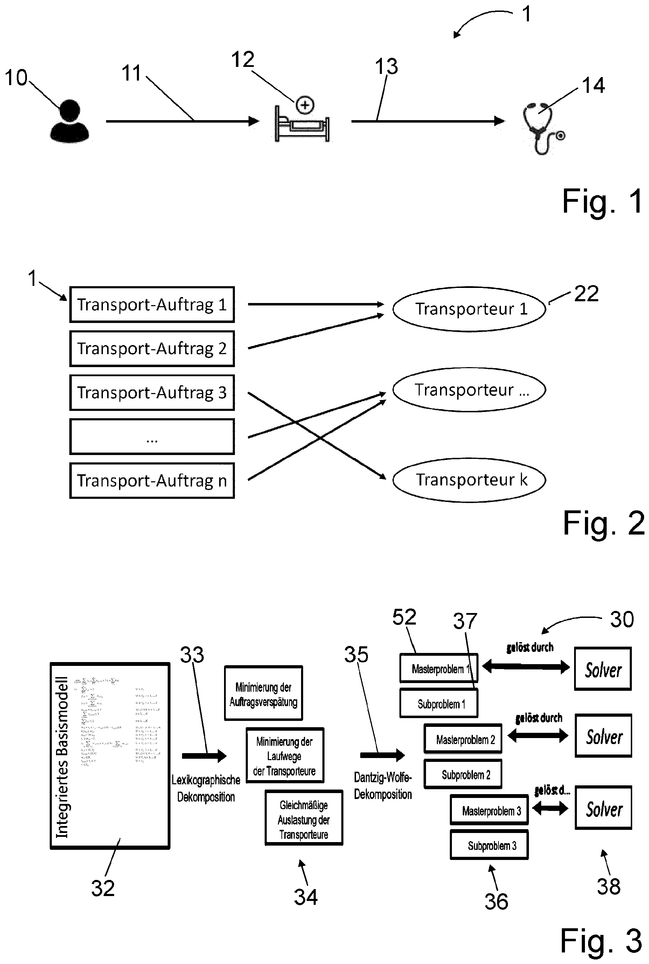

Fig. 1 zeigt ein Schema von Bestandteilen eines Transportauftrags 1 in einem Krankenhaus und Fig. 2 ein Schema einer Zuweisung der Transportaufträge 1 auf die Transporteure 22. Im Logistikbereich von großen Krankenhäusern, Alten- und Pflegeheimen hat die softwaregestützte Planung interner Prozesse deutlich an Relevanz gewonnen. Dies liegt vor allem an der zunehmenden Zentralisierung medizinischer Einrichtungen bei gleichzeitig steigenden Patientenzahlen. Ein Kernprozess der Krankenhauslogistik ist die Organisation sogenannter intrahospitaler Transporte (vgl. Fig. 1).

Bei deren Planung geht es vorwiegend darum, Transporte innerhalb eines Krankenhauses optimal auf personelle Ressourcen des Transportdienstes zu verteilen, also auf die Transporteure 22, Krankenhausmitarbeiter, die Patienten oder Krankenhausmaterial innerhalb der Klinik transportieren (vgl. Fig. 2). Ein zentrales Ziel dabei ist es, zu gewährleisten, dass die Transportaufträge 1 auf verfügbare Transporteure 22 in bestmöglicher Bearbeitungsreihenfolge verteilt werden, damit die Transportaufträge 1 fristgerecht, d. h. möglichst ohne Verspätungen, erfüllt werden können. Ein weiteres Ziel könnte jedoch auch sein, dass unnötige Laufwege der Transporteure 22 vermieden werden oder eine möglichst gleichmäßige Arbeitsauslastung aller eingeplanten Transporteure 22 sichergestellt wird. Jedoch sind darüber hinaus auch andere klinikspezifische Optimierungsziele vorstellbar.

Fig. 3 zeigt schematisch eine Ausführungsform einer erfindungsgemäßen Abfolge der zwei durchgeführten Dekompositionen 33, 35 anhand von drei beispielhaften Zielfunktionen 34. Der Lösungsansatz, das Vehicle-Routing-Problem als ein integriertes mathematisches Modell, formuliert in Basismodell 32, aufzustellen und, die sich daraus ergebende MIP-Problemformulierung mit einem kommerziellen MIP-Solver 38 zu lösen erweist sich für den Echtzeiteinsatz als zu laufzeitintensiv. So überschreiten hier bereits Berechnungen von Datensätzen realer Krankenhäuser für mittlere bis große Instanzen eine Rechenzeitvorgabe von 60 Sekunden deutlich, sodass es im Realbetrieb nicht möglich ist zur Problemlösung und damit zur Erstellung eines Transportplans ausschließlich einen MIP-Solver 38 zu verwenden.

Deshalb wurde ein Dekompositionsansatz gewählt, um die Komplexität des Gesamtproblems auf mehrere Teilprobleme aufzuteilen und somit die Rechenzeit zu verkürzen. Die Dekomposition 33, 35 kann hierbei mehrstufig erfolgen, sodass in einem Berechnungslauf mehrere - beispielsweise $n = 3$ - Optimierungsziele verfolgt werden können. Dabei wird in jeder Stufe der Dekomposition 33, 35 eine separate Zielfunktion 34 optimiert (siehe Fig. 3, linke Seite). Die Problemlösung folgt hierbei einer lexikographischen Ordnung. Das heißt, durch Veränderung der Lösung auf einer lexikographisch niedrigeren Ebene ist es nicht möglich, den Zielfunktionswert einer höher priorisierten Zielfunktion 34 zu verschlechtern. Deshalb müssen die Zielfunktionen 34 klar priorisiert werden, sodass eine sinnvolle Präferenzordnung der Optimierung entsteht.

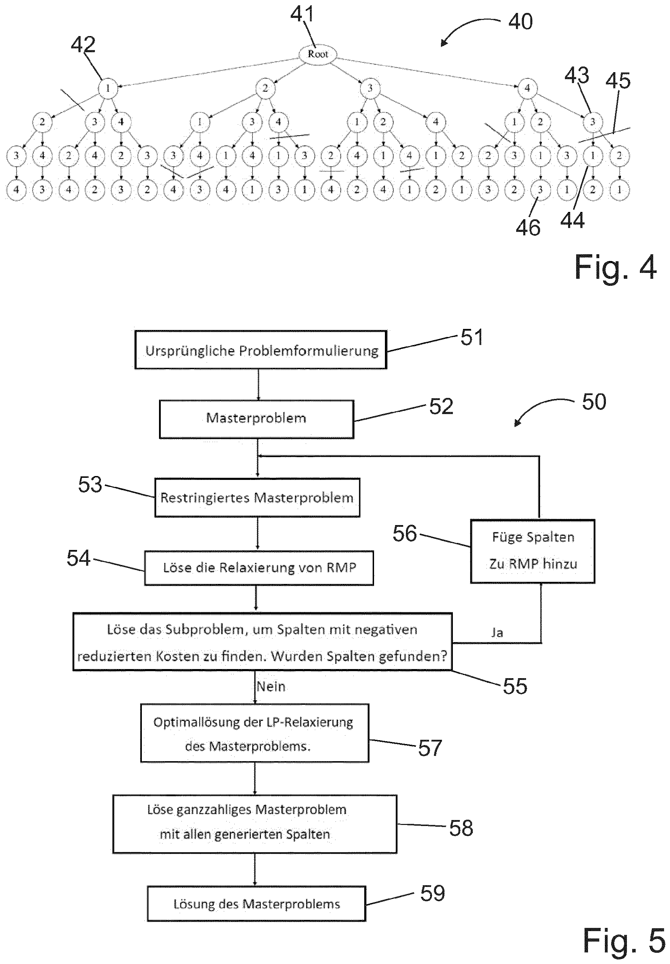

Um die Lösungszeiten des Verfahrens weiter zu verkürzen, wird in jeder der lexikographischen Stufen eine sogenannte Dantzig-Wolfe-Dekomposition 35 durchgeführt. Das heißt, die ursprüngliche Problemformulierung wird für jede Stufe des lexikographischen Verfahrens in ein Masterproblem 52 und ein Subproblem 37 aufgeteilt, sodass sich aus dem ursprünglichen MIP-Modell durch Reformulierung 2n Teilprobleme ergeben (siehe Fig. 3, rechte Seite), wobei n der Anzahl der lexikographischen Stufen entspricht. Hauptaufgabe des Subproblems 37 bei der Dekomposition ist es, gültige Auftragsrouten (Spalten der Nebenbedingungsmatrix im Masterproblem) zu generieren, die dann vom Masterproblem 52 zu möglichst optimierten Transportplänen zusammengesetzt werden (vgl. Fig. 5). Durch die erneute Dekomposition ist es bereits gelungen das Masterproblem 52 hinreichend schnell und mit hinreichender Lösungsgüte zu lösen.

Fig. 4 zeigt schematisch eine Darstellung einer Ausführungsform eines Branch-and-Bound-Baums 40, ausgehend einer Ebene Root 41, mit abgeschnittenen Teilbäumen in den Ebenen 1 bis 4 (Bezugszeichen 42 bis 46) bei der Spalten-Erzeugung im Subproblem. Im dargestellten konkreten Anwendungsfall wurde als enumeratives Verfahren zur Spaltenerzeugung ein neuer Algorithmus entwickelt, der auf dem Branch-and-Bound Pricing-Verfahren basiert. Um damit schnell und effizient Spalten generieren zu können, wurden für alle Stufen des lexikographischen Ansatzes Regeln gefunden, mit denen der im Verfahren entstehende Branch-and-Bound-Baum 40 effektiv abgeschnitten werden kann, wie in Fig. 4 dargestellt, und für die gleichzeitig mathematisch beweisbar ist, dass sie keine optimalen Routen ausschließen.

Darüber hinaus wurde der Algorithmus zu einem Online-Verfahren ausgebaut. Grundlage dieser Idee war es, dass im realen Klinik-Betrieb pro Berechnungslauf des Systems nur wenige neue Aufträge hinzukommen. Ein Großteil der Transportaufträge bleibt zwischen zwei Systemberechnungen erhalten. Dadurch ist es möglich, hochwertige Spalten - das heißt explizit: sinnvolle Auftragsrouten - einer vorherigen Berechnung wiederzuverwenden und somit dem System einen "Warmstart" zu ermöglichen. Somit wurde die spezielle Struktur von Spaltenerzeugungsmechanismen genutzt, um die Lösungsgeschwindigkeit des Verfahrens nochmals zu beschleunigen.

Fig. 5 zeigt ein schematisches Schaubild des Prinzips der Spaltenerzeugung, kurz Spaltenerzeugungsverfahren 50. Das gewählte Vorgehen entspricht einer Dantzig-Wolfe-Dekomposition 35 der ursprünglichen Problemformulierung 51, gemäß der letzteres in ein Masterproblem 52 und ein Subproblem (vgl. Fig. 3, Bezugszeichen 37) aufgeteilt wird. Jedoch sind nicht alle Spalten der Nebenbedingungsmatrix des vollständigen Masterproblems 52 vorab bekannt, sodass zunächst mit einem restringierten Masterproblem (RMP) 53 gearbeitet wird.

Hauptaufgabe des Subproblems 37 bei der Dekomposition ist es, gültige Auftragsrouten zu generieren. Diese Auftragsrouten entsprechen Spalten der Nebenbedingungsmatrix im vollständigen Masterproblem (52). Wesentlicher Bestandteil der entwickelten Methode ist es, dass statt dieses vollständigen Masterproblems ein restringiertes Masterproblem (RMP) 53 aufgestellt wird. Die Nebenbedingungsmatrix des RMPs 53 besteht initial nur aus einer kleinen Teilmenge der Spalten des vollständigen Masterproblems 52, mit denen es lediglich möglich sein muss, eine erste zulässige Lösung des RMPs 53 zu berechnen. Im darauffolgenden Schritt 54 wird die LP-Relaxierung des RMPs 53 gelöst, indem die Ganzzahligkeitsbedingung des RMPs 53 nicht berücksichtigt wird.

Es folgt ein weiterer Schritt, bei dem die Lösung des Subproblems 37 erfolgt, um Spalten mit negativen reduzierten Kosten zu ermitteln. Zudem erfolgt die Abfrage, ob solche Spalten gefunden wurden. Ist dies der Fall, werden die ermittelten Spalten in Schritt 56 der Nebenbedingungsmatrix des restringierten Masterproblems RMP 53 hinzugefügt und das Verfahren mit den Schritten 53, 54 und 55 erneut ausgeführt.

Andernfalls liegt eine RMP-Lösung, die Optimallösung der LP-Relaxierung des restringierten Masterproblems 53, vor, deren Zielfunktionswert dem Optimalwert der LP-Relaxierung des vollständigen Masterproblems 52 entspricht. Konnten beim Lösen des Subproblems im Schritt 55 (Lösen des Subproblems) keine Spalten mit negativen reduzierten Kosten gefunden werden, dann entspricht die RMP-Lösung einer der Optimallösungen 57 der LP-Relaxierung des vollständigen Masterproblems 52. Im darauffolgenden Schritt 58 (Berechnen des ganzzahligen Masterproblems) wird auf Grundlage der Spalten, die für die optimale Lösung der LP-Relaxierung erzeugt wurden, eine ganzzahlige Lösung für das vollständige Masterproblem 52 berechnet. Diese Lösung bildet das im Nachfolgenden als optimierte Lösung, die ganzzahlige Masterproblemlösung 59, bezeichnete Ergebnis des Spaltenerzeugungsverfahrens 50.

Durch diese Dekomposition ist es gelungen das vollständige Masterproblem 52 aus Sicht der Praxis, beispielsweise bei der Zuweisung von Transport-Aufträgen auf Transporteure im Krankenhaus, hinreichend schnell und mit hinreichender Lösungsgüte zu lösen.

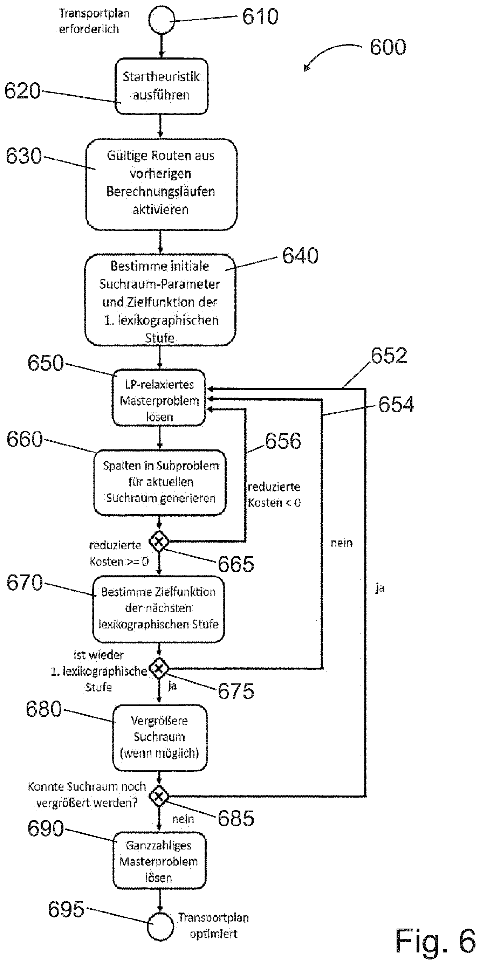

Fig. 6 zeigt ein Ablaufdiagramm des Spaltenerzeugungsalgorithmus 600. Aus der Kombination des lexikographischen Optimierungsansatzes (vgl. Fig. 3) mit dem auf Spaltenerzeugung basierenden Lösungsverfahren (vgl. Fig. 5) wurde mit dem Spaltenerzeugungsalgorithmus 600 ein neuer Algorithmus zur Lösung multikriterieller Optimierungsprobleme konstruiert. Darüber hinaus ist es gelungen, diesen durch Modifikationen des Branch-and-Bound Pricing-Verfahrens zur Lösung des Subproblems (vgl. Fig. 4) und durch die Erweiterung hin zu einem Online-Verfahren, zu einem völlig neuartigen Algorithmus weiterzuentwickeln.

Der Ablauf des Spaltenerzeugungsalgorithmus 600 beginnt mit einem erforderlichen Transportplan 610. Nachfolgend werden eine Startheuristik 620, die Aktivierung 630 gültiger Routen aus früheren Berechnungsläufen und die Bestimmung 640 initialer Suchraumparameter und die Zielfunktion 34 (vgl. Fig. 3) der ersten lexikographischen Stufe ausgeführt. Die Ausführung der Startheuristik 620 dient zur Generierung der Teilmenge der Spalten der Nebenbedingungsmatrix des Masterproblems, die für das initiale restringierte Masterproblem notwendig sind.

Es folgen die Stufen der Lösung 650 des LP-relaxierten Masterproblems und der Generierung 660 von Spalten im Subproblem für den aktuellen Suchraum. Danach erfolgt die Abfrage 665 nach reduzierten Kosten. Sind diese < 0, erfolgt erneut die Lösung 650 des LP-relaxierten Masterproblems mit den darauffolgenden Schritten.

Bringt die Abfrage 665 nach reduzierten Kosten das Ergebnis $\geq 0$, dann folgt eine Bestimmung 670 der Zielfunktion der nächsten Stufe. Mit der darauffolgenden Abfrage 675 nach der lexikographischen Stufe wird das erneute Vorliegen der ersten lexikographischen Stufe bestimmt. Liegt diese vor, folgt die Vergrößerung 680 des Suchraums, anderenfalls (Entscheidung "nein" 654) beginnt der Ablauf mit der Lösung 650 von neuem.

War die Vergrößerung 680 des Suchraums erfolgreich, ergibt die Abfrage 685 ein positives Resultat ("ja" 652), beginnt ebenfalls der Ablauf mit der Lösung 650 von neuem. Bei einem negativen Ergebnis der Abfrage 685 hingegen kann mit dem Schritt 690 "Lösung Masterproblem" fortgesetzt werden, woraus der optimierte Transportplan 695 resultiert.

Der Spaltenerzeugungsalgorithmus 600 hat im Kontext der Transportoptimierung in Krankenhäusern bewiesen, dass er im Stande ist, auch für praxisrelevante Anwendungsgebiete herausragende Ergebnisse zu liefern.

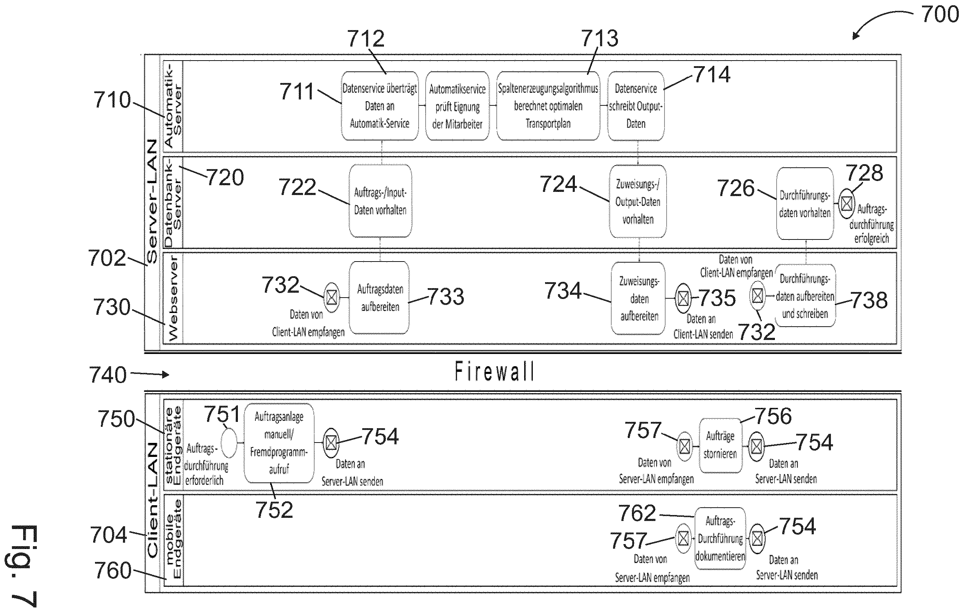

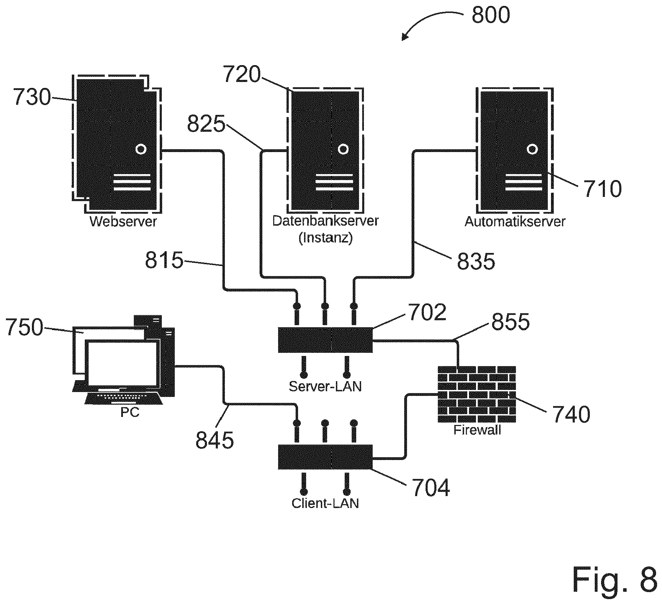

Fig. 7 zeigt ein schematisches Schaubild eines beispielhaften Sequenzdiagramms der Auftragsdurchführung 700, die Integration des Algorithmus in eine Servertopologie 800 von Krankenhaus-Servern gemäß Fig. 8. Dabei sind ein Server-LAN und ein Client-LAN über eine Firewall 740 verbunden.

Das Server-LAN 702 verbindet einen Automatikserver 710, einen Webserver 730 und einen Datenbankserver 720 über die jeweils zugehörige Anbindung 815, 825 und 835. Das Client-LAN 704 verbindet stationäre Endgeräte 750 (mit Anbindung 845 gemäß Fig. 8) und mobile Endgeräte 760.

Im stationären Endgerät 750 erfolgt die Eingabe einer "Auftragsdurchführung" 751, als Auftragsanlage 752, alternativ durch Aufruf eines Fremdprogramms. Die dabei angelegten Auftragsdaten werden an das Server-LAN 702 gesendet. Seitens des Webservers 730 erfolgt der Datenempfang 732 dieser Auftragsdaten vom Client-LAN 704. Im Webserver 730 wird eine Aufbereitung 733 vorgenommen und der Auftrag an den Datenbankserver 720 übermittelt und dort zur Übergabe an den Automatikserver 710 vorgehalten.

Im Automatikserver 710 erfolgt eine Datenübertragung an einen Automatikservice 711, gefolgt von einer Eignungsprüfung 712, betreffend den für den Auftrag vorgesehenen Transporteur 22. Es folgt eine Berechnung eines Transportplans 713 mittels des Spaltenerzeugungsalgorithmus, worauf die ermittelten Zuweisungs- und Outputdaten 714 an den Datenbankserver 720 übermittelt werden, wo sie vorgehalten werden (Schritt 724).

Aus dem Datenbankserver 720 werden die Zuweisungs- und Outputdaten an den Webserver übertragen, wo die Aufbereitung 734 der Zuweisungs- und Outputdaten erfolgt. Danach werden die Zuweisungs- und Outputdaten an das Server-LAN 704 gesendet. Mit dem Empfang dieser Zuweisungs- und Outputdaten im Client-LAN 704 (Schritt 757) können diese im stationären Endgerät 750 storniert (Schritt 756) und das Ergebnis an das Server-LAN übermittelt werden (Schritt 754).

In erster Linie ist aber der Empfang durch an das Client-LAN 704 angebundene mobile Endgeräte 760 vorgesehen. Dort wird nach der Erledigung des Auftrags dieses dokumentiert (Schritt 762) und diese Durchführungsdaten an das Server-LAN 702 gesendet (Schritt 754), entsprechend im Server-LAN 702, zur Aufbereitung 738 im Webserver 730, empfangen (Schritt 732). Danach erfolgt die Übertragung an den Datenbankserver 720 zum Vorhalten 726 der Durchführungsdaten. Von dort erfolgt die Ausgabe 728 "Auftragsdurchführung erledigt".

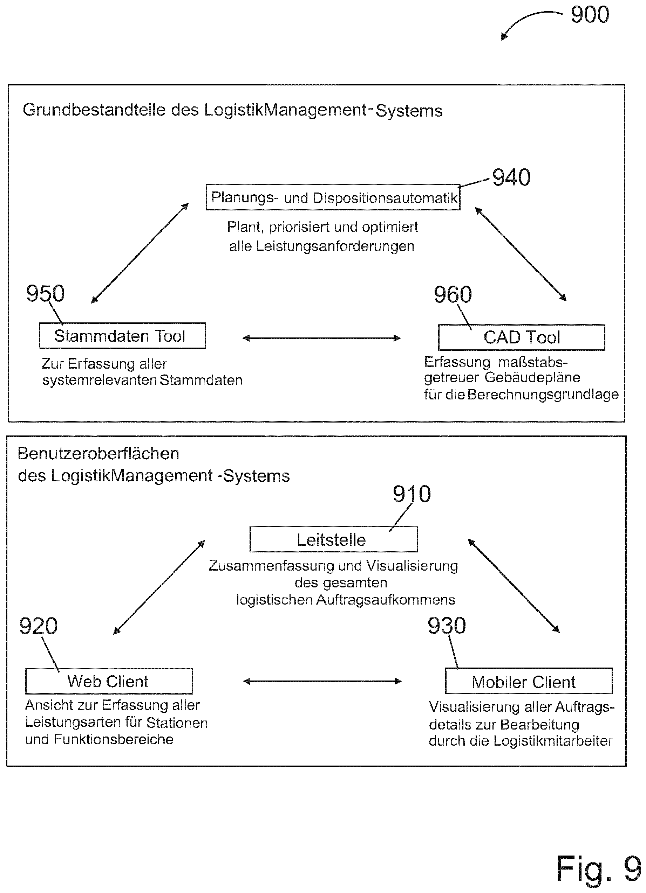

Fig. 9 zeigt eine beispielhafte Übersicht über Bestandteile des Systems zur Planung von Transporten, kurz Transportplanungssystem 900, im Krankenhaus. Darüber hinaus und ein Stück weit losgelöst von der Servertopologie 800 (vgl. Fig. 8), gibt es noch ein Stammdatentool 950 mit dessen Hilfe die speziellen Anforderungen eines jeden Krankenhauses individuell ausgestaltet werden können. Durch das CAD-Tool 960 (auch Wegetool genannt) kann ein Knoten-Kanten-Netzwerk (mathematisch gesehen ein gerichteter Graph) erstellt werden, das die Räumlichkeiten des jeweiligen Krankenhauses genau abbildet. Mithilfe dieser beiden Software-Produktkomponenten wird die Datengrundlage für die Planungs- und Dispositionsberechnungen geschaffen, deren Ergebnisse über verschiedenen Arten von Endgeräten schließlich dem Anwender visualisiert werden können. Die Bestandteile des Systems bilden die Vorrichtung zur Datenverarbeitung.

Tabelle 1 zeigt die Leistungskennzahlen der Server in dem bevorzugten Ausführungsbeispiel, wie es in einem Krankenhaus zum Einsatz kommt:

| Server | Funktion | Ausstattung |
|---|---|---|
| Webserver | Präsentationsschicht der Software als Webanwendung | 4 (v)CPUs<br>6 GB RAM |
| Datenbankserver | Persistenzschicht für alle Daten der Software | 4 (v)CPUs<br>8 GB RAM |
| Automatikserver | Compute-Layer für die Auftragsberechnung Enthält alle notwendigen Module einschließlich Solver | 8 (v)CPUs<br>16 GB RAM |

Die angegebenen Leistungskennzahlen der in Fig. 8 dargestellten Standardtopologie eines Krankenhauses hätte im dynamischen Kontext eines Echtzeitsystems nicht ausgereicht, um für den Anwender in hinreichend kurzer Zeit entsprechende Lösungsdaten bereitzustellen. Die in der Anwendung entstehenden Aufgabenstellungen sind komplex und ihre Schwierigkeit ist unter den Eingabedaten exponentiell wachsend. Die vom Datenbankserver an den Automatikserver übergebenen Datenpakete lösen dadurch zu lange Antwortzeiten aus. Zusammengefasst heißt das: Die wachsende Zahl der Lösungsmöglichkeiten ist mit einem handelsüblichen Rechner nicht in adäquater Antwortzeit zu berechnen. Der vorgenannte Algorithmus schafft es durch Dekomposition des Ausgangsproblems diesen Flaschenhals zu umgehen und die Antworten in adäquaten Zeitdauern für ein Echtzeitsystem zur Verfügung zu stellen. Die angegebenen Leistungskennzahlen entsprechen einer herkömmlichen technischen Infrastruktur im Sinne der Erfindung.

**Bezugszeichenliste**

| 1 | Transportauftrag |
| 10 | Standort Transporteur |
| 11 | Anlaufweg |
| 12 | Startpunkt |
| 13 | Transportdauer |
| 14 | Transportziel |
| 15 | Gesamtdauer |
| 22 | Transporteur |
| 30 | Dekomposition |
| 32 | Basismodell |
| 33 | lexikographische Dekomposition |
| 34 | Zielfunktion |
| 35 | Dantzig-Wolfe-Dekomposition |
| 36 | Aufteilung |
| 37 | Subproblem |
| 38 | Lösung durch MIP-Solver |
| 40 | Branch-and-Bound-Baum |
| 41 | Root |
| 42 | Ebene 1 |
| 43 | Ebene 2 |
| 44 | Ebene 3 |
| 45 | Ebene 4 |
| 46 | Ebene 5 |
| 50 | Spaltenerzeugungsverfahren |
| 51 | ursprüngliche Problemformulierung |
| 52 | Masterproblem |
| 53 | restringiertes Masterproblem (RMP) |
| 54 | Lösen der Relaxierung von RMP |
| 55 | Lösen des Subproblems |
| 56 | Hinzufügen von Spalten |
| 57 | Optimallösung LP-Relaxierung |
| 58 | Berechnen des ganzzahligen Masterproblems |
| 59 | Masterproblemlösung |
| 600 | Spaltenerzeugungsablauf |
| 610 | Transportplan (erforderlich) |
| 620 | Ausführung Startheuristik |
| 630 | Aktivierung gültiger Routen |
| 640 | Bestimmung Suchraum-Parameter, 1. lexikographische Stufe |
| 650 | Lösung LP-relaxiertes Masterproblem |
| 652 | Suchraumvergrößerung "ja" |
| 654 | erste lexikographische Stufe "nein" |
| 656 | reduzierte Kosten < 0 |
| 660 | Spalten in Subproblem generieren |
| 665 | Abfrage reduzierte Kosten |
| 670 | Bestimmung Zielfunktion nächste Stufe |
| 675 | Abfrage lexikographische Stufe |
| 680 | Vergrößerung Suchraum |
| 685 | Abfrage Vergrößerung Suchraum |
| 690 | Lösung Masterproblem |
| 695 | optimierter Transportplan |

| 700 | Auftragsdurchführung |
|---|---|
| 702 | Server-LAN |
| 704 | Client-LAN |
| 710 | Automatikserver |
| 711 | Datenübertragung an Automatikservice |
| 712 | Eignungsprüfung |
| 713 | Berechnung Transportplan |
| 714 | Zuweisungs- und Outputdaten an Datenbank |
| 720 | Datenbankserver |
| 722 | Vorhalten Input- und Auftragsdaten |
| 724 | Zuweisungs- und Outputdaten |
| 726 | Vorhalten Durchführungsdaten |
| 728 | Ausgabe "Auftragsdurchführung erledigt" |
| 730 | Webserver |
| 732 | Datenempfang von Client-LAN |
| 733 | Aufbereitung Auftragsdaten |
| 734 | Aufbereitung Zuweisungs- und Outputdaten |
| 735 | Datenversand an Client-LAN |
| 738 | Aufbereitung Durchführungsdaten |
| 740 | Firewall |
| 750 | stationäres Endgerät, PC |
| 751 | Auftragsdurchführung |
| 752 | Auftragsanlage |
| 754 | Datenversand an Server-LAN |
| 756 | Auftragsstornierung |
| 757 | Datenempfang von Server-LAN |
| 760 | mobiles Endgerät |
| 762 | Dokumentation |
| 800 | Topologie der Krankenhaus-Server |
| 815 | Webserveranbindung |
| 825 | Datenbankserveranbindung |
| 835 | Automatikserveranbindung |
| 845 | PC-Anbindung |
| 855 | Server-Client-Verbindung |
| 900 | Transportplanungssystem |
| 910 | Leitstelle |
| 920 | Webclient |
| 930 | Mobilclient |
| 940 | Planungs- und Dispositionsautomatik |
| 950 | Stammdatentool |
| 960 | CAD-Tool, Wegetool |

**Patentansprüche**

1. Computerimplementiertes Verfahren zur Lösung eines multikriteriellen Optimierungsproblems als MIP-Problem mittels eines MIP-Solvers (38), wobei die Lösungsgeschwindigkeit in dem Computer so weit erhöht wird, dass die optimierte Lösung in Echtzeit ausgegeben wird, umfassend die Schritte

a. Dekomposition des MIP-Problems in n lexikographische Stufen, wobei in jeder der lexikographischen Stufen eine separate Zielfunktion (34) optimiert wird, wobei die Zielfunktionen (34) der lexikographischen Stufen priorisiert sind,
b. Aufteilung des ursprünglichen MIP-Problems in ein Masterproblem (52) und ein Subproblem (37) bei jeder der lexikographischen Stufen, sodass sich aus dem ursprünglichen MIP-Modell 2n Teilprobleme ergeben,
c. Lösung des Subproblems mittels eines enumerativen Verfahrens, wobei für zumindest einen Teil der lexikographischen Stufen das enumerative Verfahren zur Spaltenerzeugung (50) auf einem Branch-and-Bound-Pricing-Verfahren beruht, wobei der Branch-and-Bound-Baum (40) abgeschnitten,
d. Berechnung einer optimalen Lösung der LP-Relaxierung des n-ten Masterproblems (52) und

e. Berechnung einer ganzzahligen Lösung des n-ten Masterproblems (52) auf Grundlage aller im Subproblem (37) erzeugten Spalten, wobei die ganzzahlige Lösung als optimierte Lösung das finale Ergebnis des Verfahrens darstellt.

2. Verfahren nach Anspruch 1, wobei das Aufteilen der lexikographischen Stufen in jeweils ein Masterproblem (52) und ein Subproblem (37) durch eine Dantzig-Wolfe-Dekomposition (35) erfolgt.

3. Verfahren nach Anspruch 1 oder 2, wobei als das multikriterielle Optimierungsproblem ein Vehicle-Routing-Problem aus der Logistik zum Finden optimaler Auftragsrouten gelöst wird.

4. Verfahren nach Anspruch 3, wobei das Subproblem (37) gültige Auftragsrouten als Spalten einer Nebenbedingungsmatrix im Masterproblem (52) generiert, wobei die Auftragsrouten vom Masterproblem (52) zu optimierten Transportplänen zusammengesetzt werden.

5. Verfahren nach Anspruch 3 oder 4, wobei das enumerative Verfahren zu einer Spaltenerzeugung aufgrund von Kennzahlen ausgestaltet ist und nur die für eine optimierte Lösung relevanten Auftragsrouten erzeugt und die übrigen, aus allen prinzipiell möglichen Auftragsvarianten möglichen Routen ausgeschlossen werden.

6. Verfahren nach einem der Ansprüche 3 bis 5, wobei noch zulässige Auftragsrouten einer vorherigen Berechnung zu einer zusätzlichen Erhöhung der Lösungsgeschwindigkeit wiederverwendet werden.

7. Verfahren nach einem der Ansprüche 3 bis 6, wobei optimierte Auftragsrouten für Transportaufträge (1) in einem Krankenhaus ermittelt werden.

8. Vorrichtung zur Datenverarbeitung, umfassend Mittel zur Ausführung der Schritte des Verfahrens nach einem der vorherigen Ansprüche, umfassend eine Leitstelle (910), einen Webclient (920), einen Mobilclient (930), ein Stammdatentool (950) und ein Wegetool (960), wobei über das Stammdatentool (950) die individuellen Anforderungen des konkreten Optimierungsproblems und über das Wegetool (960) die Räumlichkeiten des konkreten Optimierungsproblems als Datengrundlage für das Verfahren einbezogen werden.

9. Vorrichtung nach Anspruch 8, wobei eine Servertopologie (800) einen Webserver (810), einen Datenbankserver (820) und einen Automatikserver (830) umfasst, wobei der Webserver (810) als Präsentationsschicht der Software als Webanwendung, der Datenbankserver (820) als Persistenzschicht für alle Daten der Software und der Automatikserver (830) als Compute-Layer für die Auftragsberechnung dient und alle notwendigen Module, einschließlich des MIP-Solvers (38), enthält.

10. Vorrichtung nach Anspruch 8 oder 9, wobei der Webserver (810), der Datenbankserver (820) und der Automatikserver (830) in einem Server-LAN (850) verbunden sind, das über eine Firewall (870) mit einem Client-LAN (860), die mit stationären Endgeräten (750) und/oder mobilen Endgeräten (760) sowie weiterhin mit zumindest einer Leitstelle (910) verbunden ist.

11. Vorrichtung nach Anspruch 10, wobei der Webserver (810) über das Server-LAN (850) Zuweisungs- und Outputdaten (724) vom Datenbankserver (820) bezieht, der Automatikserver (830) Input- und Auftragsdaten (722) vom Datenbankserver (820) bezieht und anschließend alle notwendigen Berechnungen durchführt, bevor er die entsprechenden Zuweisungs- und Outputdaten (714) in die entsprechende Instanz des Datenbankservers (820) zurückschreibt.

12. Computerprogramm, umfassend Befehle, die bei der Ausführung des Programms durch einen Computer diesen veranlassen, die Schritte des Verfahrens nach einem der Ansprüche 1 bis 8 auszuführen.

13. Datenträgersignal, das das Computerprogramm gemäß Anspruch 12 überträgt.

Fig. 1

Fig. 2

Fig. 3

Fig. 4

Fig. 5

Fig. 6

Fig. 7

Fig. 8

900

**Grundbestandteile des LogistikManagement-Systems**

Planungs- und Dispositionsautomatik — 940

Plant, priorisiert und optimiert
alle Leistungsanforderungen

950

**Stammdaten Tool**

Zur Erfassung aller
systemrelevanten Stammdaten

960

**CAD Tool**

Erfassung maßstabsgetreuer Gebäudepläne
für die Berechnungsgrundlage

**Benutzeroberflächen
des LogistikManagement -Systems**

910

**Leitstelle**

Zusammenfassung und Visualisierung
des gesamten
logistischen Auftragsaufkommens

920

**Web Client**

Ansicht zur Erfassung aller
Leistungsarten für Stationen
und Funktionsbereiche

930

**Mobiler Client**

Visualisierung aller Auftragsdetails zur Bearbeitung
durch die Logistikmitarbeiter

Fig. 9

Europäisches Patentamt
European Patent Office
Office européen des brevets

**EUROPÄISCHER RECHERCHENBERICHT**

**Nummer der Anmeldung**

EP 21 18 3838

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/173042 A1 (RIEPSHOFF ROBERT D [US] ET AL) 14. Juli 2011 (2011-07-14) * Absätze [0002], [0026], [0031]; Abbildung 13 * ----- | 1-13 | INV. G06Q10/04 |
| A | Anonymous: "Dantzig-Wolfe decomposition - Wikipedia", , 6. Juni 2019 (2019-06-06), XP055852483, Gefunden im Internet: URL:https://en.wikipedia.org/w/index.php?title=Dantzig-Wolfe_decomposition&oldid=900644546 [gefunden am 2021-10-19] * das ganze Dokument * ----- | 1-13 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| München | 12. November 2021 | Thielemann, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 18 3838

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2021

| Im Recherchenbericht angeführtes Patentdokument | Datum der Veröffentlichung | Mitglied(er) der Patentfamilie | Datum der Veröffentlichung |
|---|---|---|---|
| US 2011173042 A1 | 14-07-2011 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ELMBACH, ALEXANDER F. ; SCHOLL, ARMIN ; WALTER, RICO.** Minimizing the maximal ergonomic burden in intra-hospital patient transportation. *European Journal of Operational Research,* 2019, vol. 276 (3), 840-854
- **BEAUDRY, ALEXANDRE ; LAPORTE, GILBERT ; MELO, TERESA ; NICKEL, STEFAN.** Dynamic transportation of patients in hospitals. *OR spectrum,* 2010, vol. 32 (1), 77-107
- **HANNE, THOMAS ; MELO, TERESA ; NICKEL, STEFAN.** Bringing robustness to patient flow management through optimized patient transports in hospitals. *Interfaces,* 2009, vol. 39 (3), 241-255
- **KALLRATH, JULIA.** Online storage systems and transportation problems with applications: optimization models and mathematical solutions. Springer Science & Business Media, 2006, vol. 91

- Real-time dispatching of guided and unguided automobile service units with soft time windows. **KRUMKE, S. ; RAMBAU, J. ; TORRES, L.** European Symposium on Algorithms. Springer, 2002, 637-648
- **TOTH, PAOLO ; VIGO, DANIELE.** The vehicle routing problem. SIAM, 2002
- **ISERMANN, H.** Linear lexicographic optimization. *Operations-Research-Spektrum,* 1982, vol. 4 (4), 223-228
- **DANTZIG, GEORGE B. ; WOLFE, PHILIP.** Decomposition principle for linear programs. *Operations research,* 1960, vol. 8 (1), 101-111